Europäisches Patentamt

European Patent Office

Office européen des brevets

(19)

(11) Numéro de publication: **0 009 286**
**A1**

(12) # DEMANDE DE BREVET EUROPEEN

(21) Numéro de dépôt: 79200509.2

(22) Date de dépôt: 14.09.79

(51) Int. Cl.³: **B 62 J 1/08**, B 62 K 19/36

(30) Priorité: 27.09.78 IT 8560478

(43) Date de publication de la demande: 02.04.80
Bulletin 80/7

(84) Etats contractants désignés: AT BE CH DE FR GB IT LU NL SE

(71) Demandeur: SELLA ITALIA s.n.c. di Bigolin & C., Via Salute, 50, 36028 Rossano Veneto (Vicenza) (IT).

(72) Inventeur: Bigolin, Giuseppe, Via Salute, 50, 36028 Rossano Veneto (Vicenza) (IT)

(74) Mandataire: Bettello, Luigi, Dott. Ing., Via Col d'Echele, 25, I-36100 Vicenza (IT)

(54) **Selle de bicyclette à dispositif de fixation réglable incorporé.**

(57) La selle, entièrement réalisée en matière plastique rigide, comprend un bâti interne 5 pourvu de deux oreilles verticales 3 et 4 tournées vers le bas, afin de soutenir, par l'intermédiaire d'un axe carré 2, un tambour 1 muni de striures orientées parallèlement à son axe.

Ce tambour 1 est retenu par un système de mors formé par deux mâchoires striées 7 et 9 dont l'une est ménagée à l'extrémité du tube porte-selle 8 tandis que l'autre, prévue amovible, est accrochée par son extrémité 10 à l'intérieur d'une fente 11 le la première. A l'opposé les deux mâchoires sont serrées l'une contre l'autre par un boulon traversant 12.

1

## Selle de bicyclette à dispositif de fixation réglable incorporé

La présente invention a pour objet une selle de bicyclette dans laquelle l'ensemble du châssis élastique est remplacé par un simple tambour qui est supporté par deux oreilles solidaires du bâti de la selle et qui est retenu par un système de mors prévu à l'extrémité supérieure du tube porte-selle.

Le tambour comporte des rainures superficielles orientées suivant ses génératrices et avec lesquelles coopèrent des rainures parallèles ménagées sur la surface interne de l'une au moins des mâchoires du système de mors, si bien que ledit tambour reste ainsi rigidement fixé à l'angle d'inclinaison désiré pour la selle.

Conformément à une autre caractéristique de l'invention, l'on prévoit que la mâchoire ménagée sur l'extrémité supérieure du tube porte-selle soit légèrement décalée par rapport à l'axe de celui-ci, de façon à ce que la position de la selle dans le sens longitudinal soit susceptible d'être modifiée suivant que le tube précité est monté à l'endroit ou à l'envers par rapport au tambour de soutien de ladite selle.

Le dessin annexé, donné à titre d'exemple permettra de mieux comprendre l'invention, les caractéristiques qu'elle présente et les avantages qu'elle est susceptible de procurer :

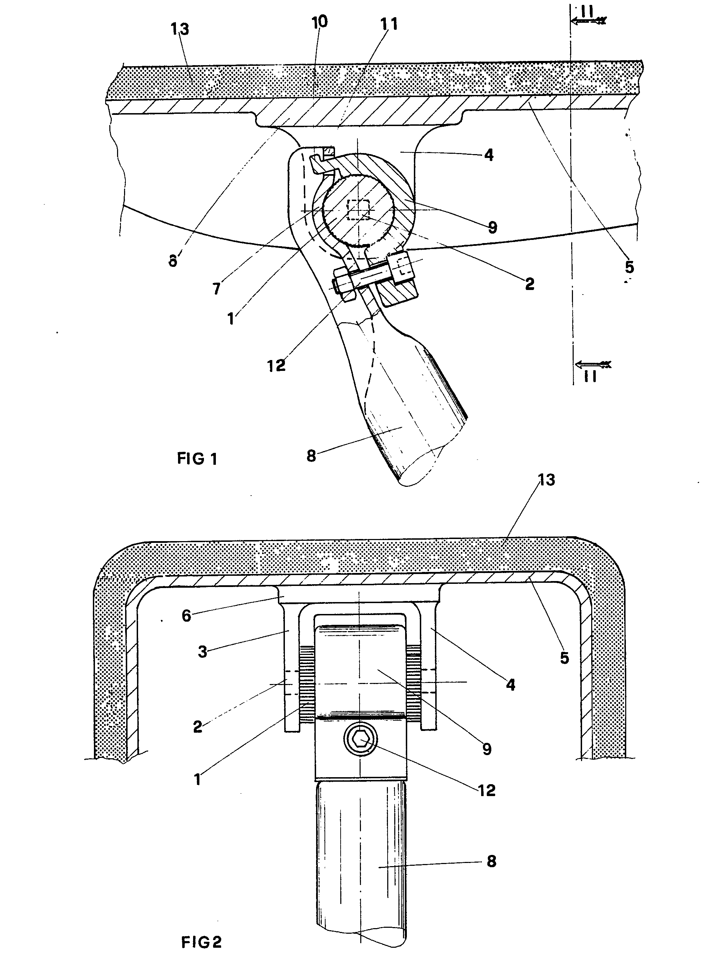

Fig. 1 est une coupe axiale montrant la partie centrale d'une selle équipée d'un dispositif de fixation établi conformément à l'invention.

Fig. 2 est une coupe transversale suivant le plan indiqué en II-II (fig. 1).

Le dispositif représenté comprend un tambour 1 dont la paroi présente des striures ou rainures superficielles orientées parallèlement à l'axe dudit tambour, lequel est soutenu, par l'intermédiaire d'un bout d'axe 2 à section carrée, par deux oreilles

2

parallèles 3 et 4 ; celles-ci font saillie verticalement vers le bas à partir du bâti interne 5 de la selle, l'ensemble étant entièrement réalisé en une matière plastique rigide appropriée.

On remarquera qu'au niveau des oreilles 3 et 4 le bâti 1 comporte une surépaisseur 6 qui garantit la rigidité parfaite desdites oreilles.

Le tambour 1 est maintenu par un système de mors dont une des mâchoires est ménagée à l'extrémité supérieure du tube porte-selle 8, tandis que l'autre, prévue amovible et référencée 9, est accrochée par sa partie supérieure repliée 10 à l'intérieur d'une fente 11 découpée dans le sommet de la mâchoire 7 susmentionnée. A l'opposé de cet accrochage les deux mâchoires sont maintenues serrées l'une contre l'autre par un boulon traversant 12, dont la tête, préférablement du type à empreinte, est noyée dans le bord inférieur de la mâchoire 9 tandis que l'écrou est accessible par l'arrière en vue de la manoeuvre d'ouverture et de fermeture du système de mors.

L'élasticité de la selle est assurée par un revêtement mou 13, par exemple en polyuréthane expansé, dont est muni son bâti porteur 5.

La paroi intérieure de la mâchoire 9 comporte avantageusement une série de striures ou rainures orientées parallèlement à l'axe du tambour 1 et propres à venir s'emboîter dans les striures ou rainures correspondantes ménagées sur la surface du tambour précité, en assurant de la sorte un blocage sûr de la selle à l'inclinaison désirée par l'usager.

La position longitudinale de cette selle peut être très simplement modifiée en inversant la position du tube porte-selle 8 par rapport à son axe longitudinal, ce réglage étant rendu possible par le décalage de la mâchoire 7 prévue à l'extrémité supérieure dudit tube.

On comprend sans peine les avantages obtenus par l'adoption de la selle suivant l'invention. Sa simplicité de réalisation per-

3

met un prix de fabrication considérablement réduit et facilite aussi bien son montage que les opérations de réglage par l'utilisateur. L'absence totale de ressorts ou autres organes élastiques diminue les risques de rupture ou d'endommagement toujours impliqués par les manoeuvres de manutention. La prévision d'un rembourrage supérieur élastique compense la plus grande rigidité de la partie structurelle de la selle.

Il doit d'ailleurs être entendu que le description qui précède n'a été donnée qu'à titre d'exemple et qu'elle ne limite nullement le domaine de l'invention dont on ne sortirait pas en remplaçant les détails d'exécution décrits par tous autres équivalents.

4

Revendications de brevet -

1. Selle pour bicyclette, à dispositif de fixation réglable incorporé, caractérisé en ce qu'elle comprend un tambour soutenu par deux oreilles solidaires de la face inférieure du bâti porteur de la selle, lequel tambour est fermement retenu par les deux mâchoires d'un système de mors prévu à l'extrémité supérieure du tube porte-selle, l'ensemble de la structure portante de la selle étant ainsi sensiblement simplifié.

2. Selle suivant la revendication 1, caractérisée en ce que la surface du tambour comporte des striures ou rainures orientées parallèlement à son axe et qui coopèrent avec des striures ou rainures correspondantes ménagées sur la paroi intérieure de l'une au moins des mâchoires du système de mors, en assurant de la sorte la garantie maximale de retenue de la selle à l'inclinaison désirée par l'usager.

3. Selle suivant l'une quelconque des revendications 1 et 2, caractérisée en ce que celle des deux mâchoires du système de mors qui est prévue à l'extrémité supérieure du tube porteselle est quelque peu décalée par rapport à l'axe de celui-ci, de façon à permettre la modification de la position longitudinale de la selle par simple inversion de l'orientation du tube précité.

4. Selle suivant l'une quelconque des revendications 1 à 3, caractérisée en ce que la mâchoire amovible du système de mors est accrochée par sa partie supérieure munie d'un bord replié, à l'intérieur d'une fente découpée dans le haut de la mâchoire fixe prévue sur le tube porte-selle, tandis qu'elle est serrée contre ladite mâchoire fixe au moyen d'un boulon traversant dont l'écrou est facilement accessible par l'utilisateur.

0009286

1/1

FIG 1

FIG 2

0009286

| | |
|---|---|
| **Office européen des brevets** | Numéro de la demande |
| **RAPPORT DE RECHERCHE EUROPEENNE** | EP 79 20 0509 |

## DOCUMENTS CONSIDERES COMME PERTINENTS

| Catégorie | Citation du document avec indication, en cas de besoin, des parties pertinentes | Revendication concernee |
|---|---|---|
| | CH - A - 318 693 (GIROD)<br>* Figures 1-5; page 1, colonne de droite; page 2, lignes 1-59 * | 1 |
| | -- | |
| | US - A - 3 501 119 (RICH)<br>* Figures 1-4; colonne 2, lignes 50-72; colonne 3; colonne 4, lignes 1-15 * | 1 |
| | -- | |
| | US - A - 4 063 775 (MESINGER)<br>* Figures 1- 8; colonne 2, lignes 52-68; colonnes 3-5; colonne 6, lignes 1-20 * | 1 |
| | ---- | |

**CLASSEMENT DE LA DEMANDE (Int. Cl.)**

B 62 J 1/08
B 62 K 19/36

**DOMAINES TECHNIQUES RECHERCHES (Int. Cl.**

B 62 J
B 62 K

**CATEGORIE DES DOCUMENTS CITES**

X: particulièrement pertinent
A: arrière-plan technologique
O: divulgation non-ecrite
P: document intercalaire
T: théorie ou principe a la base de l'invention
E: demande faisant interference
D: document cité dans la demande
L: document cite pour d'autres raisons

&: membre de la même famille.
document correspondant

Le present rapport de recherche a ete etabli pour toutes les revendications

| Lieu de la recherche | Date d'achevement de la recherche | Examinateur |
|---|---|---|
| La Haye | 02-01-1980 | VANNESTE |

OEB Form 1503.1 06.78